# EUROPEAN PATENT SPECIFICATION

(11) **EP 3 780 837 B1**
(45) Date of publication and mention of the grant of the patent: **22.12.2021**
(21) Application number: 18914904.0
(22) Date of filing: 13.04.2018
(51) Int. Cl.: H04W 72/12, H04W 48/16

(54) **COMMUNICATION METHOD AND TERMINAL DEVICE**
KOMMUNIKATIONSVERFAHREN UND ENDGERÄTEVORRICHTUNG
PROCÉDÉ DE COMMUNICATION ET DISPOSITIF TERMINAL

(43) Date of publication of application: 17.02.2021
(73) Proprietor: GUANGDONG OPPO MOBILE TELECOMMUNICATIONS CORP., LTD., Wusha, Chang'an Dongguan Guangdong 523860 (CN)
(72) Inventor: LIU, Jianhua, Dongguan, Guangdong 523860 (CN)
(74) Representative: Penza, Giancarlo
(86) International application number: PCT/CN2018/082950
(87) International publication number: WO 2019/196090

(56) References cited:
- EP-A1- 3 240 332
- WO-A1-2017/086646
- CN-A- 102 291 780
- CN-A- 106 162 683
- US-A1- 2017 367 036

## Description

### Technical Field

The present disclosure relates to the field of communication, and more particularly to a method for communication and a terminal device.

### Background

In an existing system, a core network device may send a radio access parameter (e.g., Radio Access Technology (RAT) priority, frequency priority and the like) to an access network device, and the access network device may configure the radio access parameter to a terminal device. However, the radio access parameter may not be appropriate for the terminal device, so how to configure the radio access parameter of the terminal device is a problem worth studying.

The document WO 2017/086646 A1 discloses a method and an apparatus for selecting a core network in a mobile communication system. The method and the apparatus are appropriate to the type of user's subscribed service in a mobile communication system, without the need for re-routing.

The document US 2017/367036 A1 discloses an NR network slicing architecture used to facilitate network slice discovery and selection. Mechanisms to discover and select network slices may differ depending on whether a user equipment is in an idle mode or a connected mode. Further, the network slice discovery and selection may be performed by a UE, a radio access network, or a core network, based on a variety of selection criteria.

### Summary

A method according to claim 1 and a terminal device according to claim 15 are provided. Further improvements and implementations are provided in the dependent claims.

In a first aspect, a method for communication is provided, including: receiving, by a terminal device, first information sent by a first network device, wherein the first information is a radio access parameter; determining, by the terminal device, whether to use the first information according to validity information of the first information, wherein the validity information of the first information is used for indicating an applicable condition of the first informatior, characterized in that the validity information of the first information comprises area information to which the first information applies.

In one possible implementation, the validity information of the first information further comprises time information to which the first information applies

In one possible implementation, determining, by the terminal device, whether to use the first information according to the validity information of the first information, includes: determining, by the terminal device, to use the first information if current time is within a time range to which the first information applies, or determining, by the terminal device, not to use the first information if the current time is not within the time duration to which the first information applies.

In one possible implementation, determining, by the terminal device, whether to use the first information according to the validity information of the first information, includes:
determining, by the terminal device, to use the first information if an area where the terminal device is currently located is within an area range to which the first information applies; or
determining, by the terminal device, not to use the first information if an area where the terminal device is currently located is not within an area range to which the first information applies.

In one possible implementation, the method further includes: determining, by the terminal device, the validity information of the first information.

In one possible implementation, determining, by the terminal device, the validity information of the first information, includes: receiving, by the terminal device, the validity information of the first information configured by the first network device.

In one possible implementation, determining, by the terminal device, the validity information of the first information, includes: determining, by the terminal device that an area to which the first information applies is a specific area or any area if the area information to which the first information applies is not configured on the terminal device.

In one possible implementation, determining, by the terminal device, the validity information of the first information, includes: determining, by the terminal device that time to which the first information applies is any time or a specific time, or time to which the first information applies is any time duration or a specific time duration if the time information to the which the first information applies is not configured on the terminal device.

In one possible implementation, the validity information of the first information is determined by a second network device according to at least one piece of the following:
information of the terminal device, service information of the terminal device, and information provided by a third network device.

In one possible implementation, the information of the terminal device includes mobility area information of the terminal device and/or service capability information of the terminal device.

In one possible implementation, the mobility area information of the terminal device includes at least one piece of the following: registration area information of the terminal device, tracking area information of the terminal device, paging area information of the terminal device, and a set of configured cells or base stations.

In one possible implementation, the mobility area information of the terminal device is determined according to historical movement area information of the terminal device.

In one possible implementation, the service information of the terminal device includes service priority information of the terminal device and/or network slice information of the terminal device.

In one possible implementation, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

In a second aspect, a terminal device is provided. The terminal device is configured to perform the method in the above first aspect or any one of the possible implementation of the first aspect.

### Brief Description of Drawings

FIG. 1 is a schematic diagram of an example of a communication system applicable to an implementation of the present disclosure.
FIG. 2 is a schematic flowchart of a communication method according to an implementation of the present disclosure.
FIG. 3 is a schematic flowchart of a communication method according to another implementation of the present disclosure.
FIG. 4 is a schematic flowchart of a communication method according to yet another implementation of the present disclosure.
FIG. 5 is a schematic block diagram of a network device according to an implementation of the present disclosure.
FIG. 6 is a schematic block diagram of a network device according to an implementation of the present disclosure.
FIG. 7 is a schematic block diagram of a terminal device according to an implementation of the present disclosure.
FIG. 8 is a schematic block diagram of a network device according to another implementation of the present disclosure.
FIG. 9 is a schematic block diagram of a network device according to another implementation of the present disclosure.
FIG. 10 is a schematic block diagram of a terminal device according to another implementation of the present disclosure.

### Detailed Description

Hereinafter, technical solutions in implementations of the present disclosure will be described with reference to accompanying drawings.

In addition, the terms "system" and "network" are often used interchangeably herein. The term "and/or" in this document is merely an association relationship describing associated objects, indicating that there may be three relationships, for example, A and/or B may indicate three situations: A alone, A and B, and B alone. In addition, the symbol "/" in this document generally indicates that objects of the former and the latter connected by "/" has an "or" relationship.

The technical solutions of the implementations of the present invention may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, or a future 5G system, OR a New Radio (NR) system, etc.

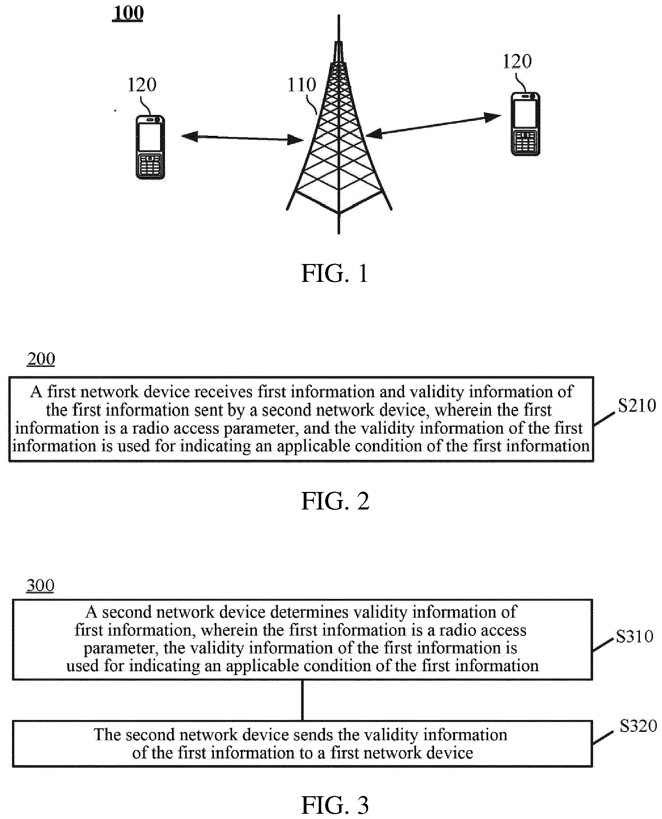

FIG. 1 shows a wireless communication system 100 applicable to an implementation of the present invention. The wireless communication system 100 may include at least one network device, for example, a first network device 110 and a second network device 120 shown in FIG. 1. Both the first network device 110 and the second network device 120 may communicate with a terminal device 130 through a wireless air interface. The network device 110 or the network device 120 may provide a communication coverage for a specific geographical area and may communicate with a terminal device located within the coverage area. The first network device 110 or the network device 120 may be a Base Transceiver Station (BTS) in a global system for mobile communication (GSM) system or a Code Division Multiple Access (CDMA) system, or a base station (NodeB) in a Wideband Code Division Multiple Access (WCDMA) system, or an evolution Node B (eNB or eNodeB) in a LTE system, or a Transmission Reception Point (TRP), a base station, a small base station device, or the like in a future 5th Generation (5G) network, implementations of the present invention are not particularly limited to this.

Optionally, the first network device 110 or the second network device 120 may also be a core network device in the communication system 100, for example, a Mobility Management Entity (MME) or a Service Gateway (SGW) or the like in the LTE system, or an Access Management Function (AMF), a Packet Data Network Gateway (PGW), a User Plane Function (UPF), a Control Plane Function (CPF) or the like in a 5G system, and implementations of the present disclosure are not limited to this.

The wireless communication system 100 also includes one or more User Equipments (UE) 130. The terminal device 130 may be mobile or fixed. The terminal device 130 may communicate with one or more core networks through a Radio Access Network (RAN). The user equipment may also be referred to as an access terminal, a User Equipment (UE), a subscriber unit, a subscriber station, a mobile station, a rover station, a remote station, a remote terminal, a mobile device, a user terminal, a terminal, a wireless communication device, a user agent, or a user apparatus. The terminal device 130 may be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a on-board device, a wearable device, a terminal device in a future 5G network, etc.

A method for communication of an implementation of the present disclosure will be described below with reference to FIGs. 2 to 4. It should be understood that FIGs. 2 to 4 are schematic flowcharts of the method for communication of an implementation of the present disclosure, showing detailed communication acts or operations of the method, but these acts or operations are only illustrative, and an implementation of the present disclosure may also perform other operations or variations of various operations in FIGs. 2 to 4.

FIG. 2 is a schematic flowchart of a method for communication according to an implementation of the present disclosure. As shown in FIG. 2, the method 200 may include act S210. This implementation is not part of the claimed invention.

In act S210, a first network device receives first information and validity information of the first information sent by a second network device, wherein the first information is a radio access parameter, and the validity information of the first information is used for indicating an applicable condition of the first information. This implementation is not part of the claimed invention.

Optionally, the first network device is a first access network device, and the second network device is a core network device or a second access network device; or the first network device is a first core network device, and the second network device is a second core network device or an access network device.

That is, the first network device and the second network device may be that one is a core network device and the other is an access network device, or the first network device and the second network device may be different access network devices or different core network devices.

For example, if the first network device is an access network device in a LTE system, the second network device may be a core network device in the LTE system or an access network device in a NR system, or if the first network device is a core network device in the LTE system, the second network device may be an access network device in the LTE system or a core network device in the NR system.

In an implementation of the present disclosure, the second network device may determine not only the first information but also the validity information of the first information, that is, an applicable condition (or, an applicable situation, an applicable scenario and the like) of the first information, so that the second network device may not only send the first information to the first network device, but also send the validity information of the first information to the first network device. Further, the first network device may configure the first information and the validity information of the first information to the terminal device, so that the terminal device may use the first information according to the validity information of the first information, so that the terminal device may use the radio access parameter under a situation that the condition is met, and is beneficial to improving a wireless access performance of the terminal device.

Optionally, in some implementations, the first information includes at least one piece of the following: Radio Access Technology (RAT) priority information, frequency priority information, and information of network slice.

Optionally, the RAT may be 4G, 3G, or 5G and the like, and the implementations of the present disclosure are not limited thereto.

Optionally, the RAT priority may be used for indicating a priority order of different RATs, and the frequency priority is used for indicating a priority order between different frequency points.

Optionally, the information of the network slice may be the information of the network slice subscribed by the terminal device, or the information of the network slice configured by the network, or the information of the network slice allowed to be accessed by the terminal device, or the information of the network slice requested to be accessed by the terminal device, etc.

It should be understood that contents included in the above first information is only an example and not a limitation, and the first information may also include other parameter for a radio access, or, a parameter for cell selection or cell reselection, and implementations of the present disclosure are not limited thereto.

Optionally, in some implementations, the validity information of the first information includes time information to which the first information applies and/or area information to which the first information applies.

For example, if the first information is only applicable to a specific time or a specific area, that is, the first information is only valid at a specific time and/or within a specific area, that is, the specific time is a valid time of the first information and the specific area is a valid area of the first information, then the validity information of the first information may be the specific time and/or the specific area, so that the terminal device may determine whether the applicable condition of the first information is met according to current time and/or a current area, to decide whether to use the first information.

For example, if the current time is not within the valid time of the first information, the terminal device may determine not to use the first information, or if the current time is within the valid time of the first information, the terminal device may determine to use the first information.

Or, if the area where the terminal device is currently located is not within the valid area of the first information, the terminal device may determine not to use the first information, or if the area where the terminal device is currently located is within the valid area of the first information, the terminal device may determine to use the first information, etc.

Optionally, in an implementation of the present disclosure, the first information may be one or more groups, and each group of the first information may correspond to corresponding validity information, that is, each group of the first information may correspond to a corresponding applicable condition, so that the terminal device may determine which group of the first information to use according to a current condition. For example, the terminal device may determine the applicable condition of which group of the first information is met according to the current time and/or the current area, and then which group of the first information to use may be determined.

Optionally, in some implementations, the validity information of the first information may be determined by the second network device according to at least one piece of the following: information of the terminal device, service information of the terminal device, and information provided by a third network device.

Optionally, in some implementations, the information of the terminal device may include mobility area information of the terminal device and/or service capability information of the terminal device.

Optionally, the information of the terminal device may also include other attribute information of the terminal device, and implementations of the present disclosure are not limited thereto.

Optionally, the service capability information of the terminal device may include service information supported by the terminal device, and the service supported by the terminal device may correspond to a corresponding area, so that the second network device may determine the area information corresponding to the first information according to the area corresponding to the service supported by the terminal device. For example, the second network device may determine the area corresponding to the service supported by the terminal device as the area corresponding to the first information.

For example, the terminal device supports a video service, and a valid area corresponding to the video service is a first area (for example, an area where the company or home is located), that is, the terminal device supports the video service in the first area and does not support the video service in other area, so the second network device may determine the first area corresponding to the video service as the valid area to which the first information applies.

Optionally, in some implementations, the mobility area information of the terminal device includes at least one piece of the following: registration area information of the terminal device, tracking area information of the terminal device, paging area information of the terminal device, and a set of configured cells or base stations.

That is, the mobility area information of the terminal device may be at least one of a registration area, a tracking area and a paging area of the terminal device; or the mobility area information of the terminal device may also be represented by a set of configured cells or base stations, herein, the configured cells or base stations may be specifically a list of configured cells or base stations for display to the terminal device, and then an area covered by the cells or base stations in the set of cells or base stations may be used for determining the mobility area of the terminal device. For example, the second network device may determine an intersection of the areas covered by the cells or base stations in the set as the mobility area of the terminal device, or may also determine a union of the areas covered by the cells or base stations in the set as the mobility area of the terminal device and the like.

Optionally, in an implementation of the present disclosure, the mobility area information of the terminal device may be determined according to historical mobility area information of the terminal device, for example, the mobility area information of the terminal device may be acquired by performing big data processing on the historical mobility area of the terminal device.

Optionally, in some implementations, the service information of the terminal device may include service priority information of the terminal device and/or network slice information of the terminal device.

Optionally, the second network device may determine valid area information and/or valid time information corresponding to the first information according to area information and/or time information corresponding to a subscribed high priority service, wherein the area corresponding to the high priority service is the valid area of the high priority service, and the time corresponding to the high priority service is the valid time of the high priority service. In a specific implementation, the second network device may determine the area corresponding to the high priority service as the valid area corresponding to the first information.

Optionally, the network slice information of the terminal device may be the information of the network slice subscribed by the terminal device, or the information of the network slice configured to the terminal device by the network, or the information of the network slice allowed to be accessed by the terminal device, or the information of the network slice requested to be accessed by the terminal device and the like, and implementations of the present disclosure are not limited thereto.

Optionally, the second network device may determine the valid area information and/or valid time information corresponding to the first information according to the area information and/or time information corresponding to the network slice, wherein the area corresponding to the network slice is the valid area of the network slice, i.e. within the valid area, the network slice may provide a service to the terminal device, and the time corresponding to the network slice is the valid time of the network slice, i.e. within the valid time, the network slice may provide a service to the terminal device. In one possible implementation, the second network device may determine the area corresponding to the network slice subscribed by the terminal device as the valid area corresponding to the first information.

Optionally, in some implementations, the information provided by the third network device may be a policy or a rule for wireless access provided by the third network device, for example, the information provided by the third network device may indicate a cell with priority access to a first frequency point, or a cell with priority access to a first RAT, etc.

Optionally, the third network device may be a Point Coordination Function (PCF), or an access network device, or other core network device, etc. Implementations of the present disclosure are not limited thereto.

In an implementation of the present disclosure, after the second network device determines the validity information of the first information, it may not only send the first information to the first network device, but also send the validity information of the first information to the first network device. Optionally, the second network device may send the first information and the validity information of the first information to the first network device through a same message, or may send the validity information of the first information and the first information to the first network device through different messages, and implementations of the present disclosure are not limited thereto.

After act S210, further, the first network device may configure the first information and the validity information of the first information to the terminal device, so that the terminal device may determine whether to use the first information according to the validity information of the first information.

For example, if the area where the terminal device is currently located is not within the valid area corresponding to the first information, the terminal device may determine that the first information is invalid, so that the first information may not be used, or if the area where the terminal device is currently located is within the valid area corresponding to the first information, the terminal device may determine that the first information is valid, so that the first information may be used.

For another example, if the current time is not within a valid time range corresponding to the first information, that is, the valid time of the first information expires, the terminal device may determine that the first information is invalid, so that the first information may not be used, or if the current time is within the valid time range corresponding to the first information, that is, the valid time of the first information does not expire, the terminal device may determine that the first information is valid, so that the first information may be used.

Optionally, in some implementations, if the validity information of the first information does not include the area information corresponding to the first information, that is, the valid area information of the first information is not configured, in this case, the terminal device may determine that the area information corresponding to the first information is any area or a specific area, that is, the valid area of the first information may be any area or the specific area, so that the terminal device may use the first information in any area or the specific area.

Optionally, the specific area may be preconfigured, or specified by a communication system, or configured by the network device, etc., and the implementations of the present disclosure are not limited thereto.

Optionally, in some implementations, the specific area includes at least one of the following: a cell where the terminal device currently resides, the paging area of the terminal device, the registration area of the terminal device, the tracking area of the terminal device, and the service area of the terminal device.

Optionally, the service area of the terminal device may be understood as the area where the terminal device initiates a service, or the area where the terminal device performs a service transmission.

Optionally, in some implementations, if the validity information of the first information does not include the time information corresponding to the first information, that is, the valid time information of the first information is not configured, in this case, the terminal device may determine that the time information corresponding to the first information is any time or a specific time, that is, the valid time of the first information may be any time or a specific time, so that the terminal device may use the first information at any time or within the specific time.

Optionally, the specific time may be preconfigured, or specified by the communication system, or configured by network device, etc., and implementations of the present disclosure are not limited thereto.

For example, the specific time may be from 9:00 a.m. to 7:00 p.m., so that the terminal device may determine to use the first information from 9:00 a.m. to 7:00 p.m. and not to use the first information in other time.

Therefore, in an implementation of the present disclosure, the first network device may not only configure the first information to the terminal device, but also configure the validity information of the first information to the terminal device, so that the terminal device may determine whether to use the first information according to the validity information of the first information. Therefore, the terminal device may use the radio access parameter under a situation that the condition is met, which is beneficial to improving a radio access performance of the terminal device.

A method for communication according to an implementation of the present disclosure is described in detail from the perspective of the first network device above with reference to FIG. 2, and a method for communication method according to another implementation of the present disclosure is described in detail from the perspective of a second network device below with reference to FIG. 3. It should be understood that description for the second network device side and description for the first network device side correspond to each other, and similar descriptions may be found above, which will not be repeated here to avoid repetition.

FIG. 3 is a schematic flowchart of a method for communication according to another implementation of the present invention. As shown in FIG. 3, the method 300 may include acts S310 and S320. This implementation is not part of the claimed invention.

In act S310, the second network device determines validity information of first information, wherein the first information is a radio access parameter, and the validity information of the first information is used for indicating an applicable condition of the first information. This implementation is not part of the claimed invention.

In act S320, the second network device sends the validity information of the first information to a first network device. This implementation is not part of the claimed invention.

Therefore, in an implementation of the present disclosure, the second network device may determine not only the first information, but also the validity information of the first information, so that the validity information of the first information may be transmitted to the first network device. Further, the first network device may configure the validity information of the first information to the terminal device, so that the terminal device may determine whether to use the first information according to the validity information of the first information. Therefore, the terminal device may use the radio access parameter under a situation that the condition is met, which is beneficial to improving a radio access performance of the terminal device.

Optionally, in some implementations, the validity information of the first information includes time information to which the first information applies and/or area information to which the first information applies.

Optionally, in some implementations, the act S310 may include: the second network device determines the validity information of the first information according to at least one piece of the following: information of the terminal device, service information of the terminal device, and information provided by a third network device.

Optionally, in some implementations, the information of the terminal device includes mobility area information of the terminal device and/or service capability information of the terminal device.

Optionally, in some implementations, the mobility area information of the terminal device includes at least one piece of the following: registration area information of the terminal device, tracking area information of the terminal device, paging area information of the terminal device, and a set of configured cells or base stations.

Optionally, in some implementations, the mobility area information of the terminal device may be determined according to historical movement area information of the terminal device.

Optionally, in some implementations, the service information of the terminal device includes service priority information of the terminal device and/or network slice information of the terminal device.

Optionally, in some implementations, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

Optionally, in some implementations, the second network device transmits the validity information of the first information to the first network device, including: the second network device transmits the first information and the validity information of the first information to the first network device.

Optionally, the second network device may send the first information and the validity information of the first information to the first network device through a same message, or may send the validity information of the first information and the first information to the first network device through different messages, and the implementations of the present disclosure are not limited thereto.

Optionally, in some implementations, the first network device is a first access network device, and the second network device is a core network device or a second access network device; or the first network device is a first core network device, and the second network device is a second core network device or an access network device.

Optionally, in some implementations, the first information includes at least one piece of: radio access technology (RAT) priority information, frequency priority information and the information of network slice.

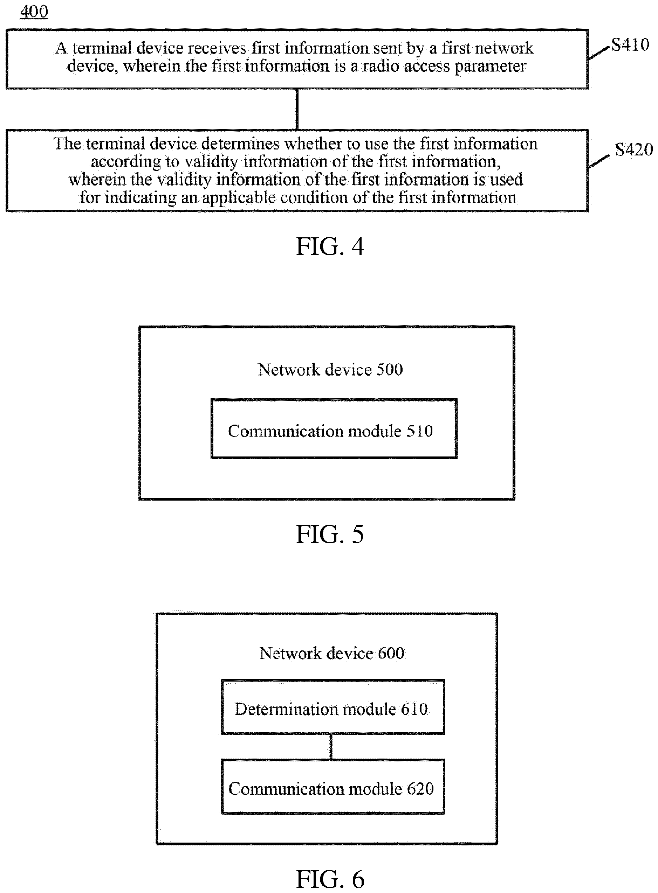

A method for communication according to an implementation of the present disclosure is described in detail from the perspective of the first network device and the second network device above with reference to FIG. 2 and FIG. 3, and the method for communication according to another implementation of the present disclosure is described in detail from the perspective of the terminal device below with reference to FIG. 4. It should be understood that the description of the network device side corresponds to the description of the terminal device side, and the contents in the above may be referred to for similar descriptions, which will not be repeated here to avoid repetition.

FIG. 4 is a schematic flowchart of a method 400 for communication according to an implementation of the present disclosure, which may be executed by the terminal device in the wireless communication system shown in FIG. 1. As shown in FIG. 4, the method 400 includes acts S410 and S420.

In act S410, the terminal device receives first information sent by the first network device, wherein the first information is a radio access parameter.

In act S420, the terminal device determines whether to use the first information according to validity information of the first information, wherein the validity information of the first information is used for indicating an applicable condition of the first information.

Optionally, in some implementations, the validity information of the first information includes time information to which the first information applies and/or area information to which the first information applies.

Optionally, the validity information of the first information may be configured by the first network device or may be determined by the terminal device. Implementations of the present disclosure are not limited thereto. For example, if the validity area information of the first information is not configured, the terminal device may determine that a valid area of the first information is any area or a specific area, or if the validity time information of the first information is not configured, the terminal device may determine that a valid time of the first information is any time or a specific time.

Optionally, in some implementations, the terminal device determines whether to use the first information according to validity information of the first information, including: if current time is within a time range to which the first information applies, the terminal device determines to use the first information; or if the current time is not within the time range to which the first information applies, the terminal device determines not to use the first information.

Optionally, in some implementations, the terminal device determines whether to use the first information according to the validity information of the first information, including: if an area where the terminal device is currently located is within the area range to which the first information applies, the terminal device determines to use the first information; or if the area where the terminal device is currently located is not within the area range to which the first information applies, the terminal device determines not to use the first information.

Optionally, in some implementations, the method 400 further includes: the terminal device determines the validity information of the first information.

For example, if the first network device configures the validity information of the first information to the terminal device, the terminal device may determine the validity information of the first information configured by the first network device as the validity information of the first information, or if the first network device does not configure the validity information of the first information to the terminal device, the terminal device may determine the validity information of the first information itself. For example, if the valid area information of the first information is not configured, the terminal device may determine that the valid area of the first information is any area or a specific area, or if the valid time information of the first information is not configured, the terminal device may determine that the valid time of the first information is any time or a specific time.

Optionally, in some implementations, the terminal device determines the validity information of the first information, including: if the area information to which the first information applies is not configured on the terminal device, the terminal device determines that the area to which the first information applies is a specific area or any area.

Optionally, in some implementations, the specific area includes at least one of the following: a cell where the terminal device currently resides, a paging area of the terminal device, a registration area of the terminal device, a tracking area of the terminal device, and a service area of the terminal device.

Optionally, in some implementations, the terminal device determines the validity information of the first information, including: if the time information to which the first information applies is not configured on the terminal device, the terminal device determines that the time to which first information applies is any time or a specific time, or a time duration to which the first information applies is any time duration or a specific time duration.

Optionally, in some implementations, the specific time is preconfigured time or time specified by the communication system; the specific time duration is a preconfigured time duration or a time duration specified by the communication system.

Optionally, in some implementations, the validity information of the first information is determined by the second network device according to at least one piece of the following: information of the terminal device, service information of the terminal device, and information provided by a third network device.

Optionally, in some implementations, the information of the terminal device includes mobility area information of the terminal device and/or service capability information of the terminal device.

Optionally, in some implementations, the mobility area information of the terminal device includes at least one piece of the following: registration area information of the terminal device, tracking area information of the terminal device, paging area information of the terminal device, and a set of configured cells or base stations.

Optionally, in some implementations, the mobility area information of the terminal device is determined according to the historical movement area information of the terminal device.

Optionally, in some implementations, the service information of the terminal device includes service priority information of the terminal device and/or network slice information of the terminal device.

Optionally, in some implementations, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

Optionally, in some implementations, the first network device is a first access network device, and the second network device is a core network device or a second access network device; or the first network device is a first core network device, and the second network device is a second core network device or an access network device.

Optionally, in some implementations, the first information includes at least one piece of the following: radio access technology (RAT) priority information, frequency priority information and information of network slice.

Method implementations of the present disclosure are described in detail above with reference to FIGs. 2 to 4, apparatus implementations of the present disclosure are described in detail below with reference to FIGs. 5 to 10. It should be understood that the apparatus implementations and the method implementations correspond to each other, and description of the method implementations may be referred to for similar description of the apparatus implementations.

FIG.5 shows a schematic block diagram of a network device 500 according to an implementation of the present disclosure. As shown in FIG. 5, the network device 500 includes a communication module 510. This implementation is not part of the claimed invention.

The communication module 510 is configured to receive first information and validity information of the first information sent by a second network device, wherein the first information is a radio access parameter, and the validity information of the first information is used for indicating an applicable condition of the first information. This implementation is not part of the claimed invention.

Optionally, in some implementations, the validity information of the first information includes time information to which the first information applies and/or area information to which the first information applies.

Optionally, in some implementations, the validity information of the first information is determined by the second network device according to at least one piece of the following: information of the terminal device, service information of the terminal device, and information provided by a third network device.

Optionally, in some implementations, the information of the terminal device includes mobility area information of the terminal device and/or service capability information of the terminal device.

Optionally, in some implementations, the mobility area information of the terminal device includes at least one piece of the following: registration area information of the terminal device, tracking area information of the terminal device, paging area information of the terminal device, and a set of configured cells or base stations.

Optionally, in some implementations, the mobility area information of the terminal device is determined according to the historical movement area information of the terminal device.

Optionally, in some implementations, the service information of the terminal device includes service priority information of the terminal device and/or network slice information of the terminal device.

Optionally, in some implementations, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

Optionally, in some implementations, the communication module 510 is further configured to: configure the first information and the validity information of the first information to the terminal device.

Optionally, in some implementations, the network device is a first access network device, and the second network device is a core network device or a second access network device; or the network device is a first core network device, and the second network device is a second core network device or an access network device.

Optionally, in some implementations, the first information includes at least one piece of the following: radio access technology (RAT) priority information, frequency priority information and information of network slice.

It should be understood that the network device 500 according to an implementation of the present disclosure may correspond to the first network device in the method implementations of the present disclosure, and the above-mentioned other operations and/or functions of various units in the network device 500 are respectively for realizing the corresponding processes of the first network device in the method 200 shown in FIG.2, and this will not be repeated here for sake of conciseness.

FIG.6 shows a schematic block diagram of a network device 600 according to an implementation of the present disclosure. As shown in FIG. 6, the network device 600 includes a determination module 610 and a communication module 620. This implementation is not part of the claimed invention.

The determination module 610 is configured to determine validity information of first information, wherein the first information is a radio access parameter, and the validity information of the first information is used for indicating an applicable condition of the first information. This implementation is not part of the claimed invention.

The communication module 620 is configured to send the validity information of the first information to a first network device. This implementation is not part of the claimed invention.

Optionally, in some implementations, the validity information of the first information includes time information to which the first information applies and/or area information to which the first information applies.

Optionally, in some implementations, the determination module 610 is specifically configured to determine the validity information of the first information according to at least one piece of the following: information of the terminal device, service information of the terminal device, and information provided by a third network device.

Optionally, in some implementations, the information of the terminal device includes mobility area information of the terminal device and/or service capability information of the terminal device.

Optionally, in some implementations, the mobility area information of the terminal device includes at least one piece of the following: registration area information of the terminal device, tracking area information of the terminal device, paging area information of the terminal device, and a set of configured cells or base stations.

Optionally, in some implementations, the mobility area information of the terminal device is determined according to historical movement area information of the terminal device.

Optionally, in some implementations, the service information of the terminal device includes service priority information of the terminal device and/or network slice information of the terminal device.

Optionally, in some implementations, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

Optionally, in some implementations, the communication module 620 is further configured to: send the first information and the validity information of the first information to the first network device.

Optionally, in some implementations, the first network device is a first access network device, and the network device is a core network device or a second access network device; or the first network device is a first core network device, and the network device is a second core network device or an access network device.

Optionally, in some implementations, the first information includes at least one piece of the following: Radio access technology (RAT) priority information, frequency priority information and information of network slice.

It should be understood that the device 600 according to an implementation of the present disclosure may correspond to the second network device in the method implementations of the present disclosure, and the above-mentioned other operations and/or functions of various units in the device 600 are respectively for realizing the corresponding processes of the second network device in the method 300 shown in FIG. 3, and this will not be repeated here for sake of conciseness.

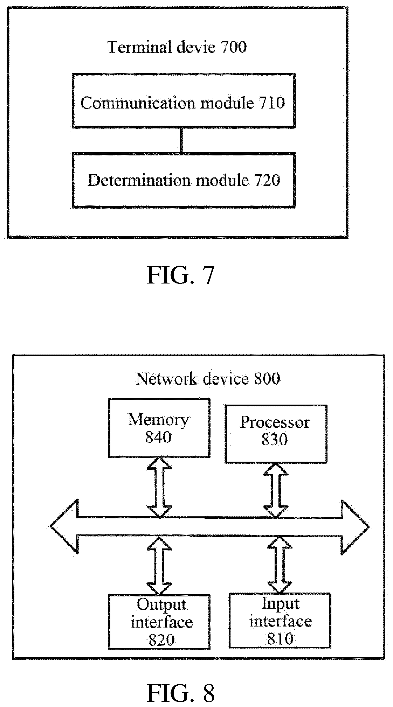

FIG. 7 is a schematic block diagram of a terminal device according to an implementation of the present disclosure. As shown in FIG. 7, the terminal device 700 includes a communication module 710 and a determination module 720.

The communication module 710 is configured to receive first information sent by a first network device, wherein the first information is a radio access parameter.

The determination module 720 is configured to determine whether to use the first information according to validity information of the first information, wherein the validity information of the first information is used for indicating an applicable condition of the first information.

Optionally, in some implementations, the validity information of the first information includes time information to which the first information applies and/or area information to which the first information applies.

Optionally, in some implementations, the determination module 720 is specifically configured to: determine to use the first information if current time is within a time range to which the first information applies; or determine not to use the first information if the current time is not within a time range to which the first information applies.

Optionally, in some implementations, the determination module 720 is specifically configured to: determine to use the first information if an area where the terminal device is currently located is within an area range to which the first information applies; or determine not to use the first information if an area where the terminal device is currently located is not within an area range to which the first information applies.

Optionally, in some implementations, the determination module 720 is further configured to determine the validity information of the first information.

Optionally, in some implementations, the communication module 710 is further configured to receive the validity information of the first information configured by the first network device.

Optionally, in some implementations, the determination module 720 is specifically configured to: determine that an area to which the first information applies is a specific area or any area if the area information to which the first information applies is not configured on the terminal device.

Optionally, in some implementations, the specific area includes at least one of the following: a cell where the terminal device currently resides, a paging area of the terminal device, a registration area of the terminal device, a tracking area of the terminal device, and a service area of the terminal device.

Optionally, in some implementations, the determination module 720 is specifically configured to: determine that time to which the first information applies is any time or a specific time, or a time duration to which the first information applies is any time duration or a specific time duration if the time information to which the first information applies is not configured on the terminal device.

Optionally, in some implementations, the specific time is preconfigured time or time specified by the communication system; the specific duration is a preconfigured duration or a time duration specified by the communication system.

Optionally, in some implementations, the validity information of the first information is determined by the second network device according to at least one piece of the following:
information of the terminal device, service information of the terminal device, and information provided by a third network device.

Optionally, in some implementations, the information of the terminal device includes mobility area information of the terminal device and/or service capability information of the terminal device.

Optionally, in some implementations, the mobility area information of the terminal device includes at least one piece of the following: registration area information of the terminal device, tracking area information of the terminal device, paging area information of the terminal device, and a set of configured cells or base stations.

Optionally, in some implementations, the mobility area information of the terminal device is determined according to historical movement area information of the terminal device.

Optionally, in some implementations, the service information of the terminal device includes service priority information of the terminal device and/or network slice information of the terminal device.

Optionally, in some implementations, the network slice information of the terminal device includes at least one piece of the following: information of network slice subscribed by the terminal device, or information of network slice configured by the network device, or information of network slice allowed to be accessed by the terminal device, or information of network slice requested to be accessed by the terminal device.

Optionally, in some implementations, the first network device is a first access network device, and the second network device is a core network device or a second access network device; or the first network device is a first core network device, and the second network device is a second core network device or an access network device.

Optionally, in some implementations, the first information includes at least one piece of: Radio Access Technology (RAT) priority information, frequency priority information and information of network slice.

Specifically, the terminal device 700 may correspond to (e.g., it may be configured as or it is) the terminal device described in the method 400, and various modules or units in the terminal device 700 are respectively configured to execute various actions or processes performed by the network device in the method 400. Herein, in order to avoid redundancy, detailed description thereof is omitted.

As shown in FIG. 8, an implementation of the present disclosure also provides a network device 800, which may be the network device 500 in FIG. 5, and may be configured to execute the contents of the first network device corresponding to the method 200 in FIG. 2. The network device 800 includes an input interface 810, an output interface 820, a processor 830, and a memory 840. The input interface 810, the output interface 820, the processor 830, and the memory 840 may be connected through a bus system. The memory 840 is configured to store programs, instructions, or codes. The processor 830 is configured to execute programs, instructions, or codes in the memory 840 to control the input interface 810 to receive signals, to control the output interface 820 to send signals, and to complete the operations in the foregoing method implementations. This implementation is not part of the claimed invention.

It should be understood that in the implementations of the present disclosure, the processor 830 may be a Central Processing Unit (CPU), or the processor 830 may be other general-purpose processor, digital signal processor (DSP), disclosure specific integrated circuits (ASIC), field programmable gate arrays (FPGA) or other programmable logic device, discrete gate or transistor logic device, discrete hardware components, etc. The general-purpose processor may be a microprocessor, or the processor may be any conventional processor or the like.

The memory 840 may include the read only memory and random access memory, and provide instructions and data to the processor 830. A portion of memory 840 may include non-transitory random access memory. For example, the memory 840 may also store information of device type.

In implementation processes, various contents of the methods described above may be accomplished by integrated logic circuits of hardware or instructions in the form of software in the processor 830. The contents of the method disclosed in connection with the implementations of the present disclosure may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 840, and the processor 830 reads information in the memory 840 and completes the contents of the above method in combination with its hardware. In order to avoid repetition, it will not be described in detail here.

In a specific implementation, the communication module 510 included in the device 500 in FIG. 5 may be implemented by the input interface 810 and the output interface 820 in FIG. 8.

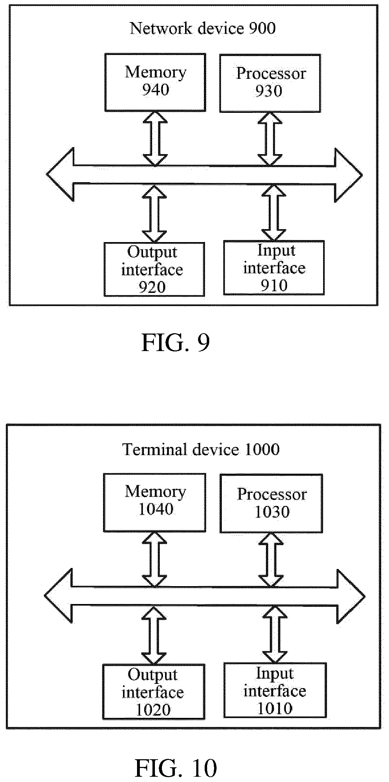

As shown in FIG. 9, an implementation of the present disclosure also provides a network device 900, which may be the network device 600 in FIG. 6, and may be configured to execute the contents of the second network device corresponding to the method 300 in FIG. 3. The network device 900 includes an input interface 910, an output interface 920, a processor 930, and a memory 940. The input interface 910, the output interface 920, the processor 930, and the memory 940 may be connected through a bus system. The memory 940 is configured to store programs, instructions, or codes. The processor 930 is configured to execute programs, instructions, or codes in the memory 940 to control the input interface 910 to receive signals, to control the output interface 920 to send signals, and to complete the operations in the foregoing method implementations. This implementation is not part of the claimed invention.

It should be understood that in the implementations of the present disclosure, the processor 930 may be a Central Processing Unit (CPU), or the processor 930 may be other general-purpose processor, digital signal processor (DSP), disclosure specific integrated circuits (ASIC), field programmable gate arrays (FPGA) or other programmable logic device, discrete gate or transistor logic device, discrete hardware components, etc. The general-purpose processor may be a microprocessor, or the processor may be any conventional processor or the like.

The memory 940 may include the read only memory and random access memory, and provide instructions and data to the processor 930. A portion of memory 940 may include non-transitory random access memory. For example, the memory 940 may also store information of device type.

In implementation processes, various contents of the methods described above may be accomplished by integrated logic circuits of hardware or instructions in the form of software in the processor 930. The contents of the method disclosed in connection with the implementations of the present disclosure may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 940, and the processor 930 reads information in the memory 940 and completes the contents of the above method in combination with its hardware. In order to avoid repetition, it will not be described in detail here.

In a specific implementation, the determination module 610 included in the device 600 in FIG. 6 may be implemented by the processor 930 in FIG. 9, and the communication module 620 included in the device 600 in FIG. 6 may be implemented by the input interface 910 and the output interface 920 in FIG. 9.

As shown in FIG. 10, an implementation of the present disclosure further provides a terminal device 1000, which may be the terminal device 700 in FIG. 7 and may be configured to execute the contents of the terminal device corresponding to the method 400 in FIG. 4. The terminal device 1000 includes an input interface 1010, an output interface 1020, a processor 1030, and a memory 1040. The input interface 1010, the output interface 1020, the processor 1030, and the memory 1040 may be connected through a bus system. The memory 1040 is used for storing programs, instructions, or codes. The processor 1030 is configured to execute programs, instructions, or codes in the memory 1040 to control the input interface 1010 to receive signals, to control the output interface 1020 to send signals, and to complete the operations in the foregoing method implementations.

It should be understood that in the implementations of the present disclosure, the processor 1030 may be a Central Processing Unit (CPU), or the processor 1030 may be other general-purpose processor, digital signal processor (DSP), disclosure specific integrated circuits (ASIC), field programmable gate arrays (FPGA) or other programmable logic device, discrete gate or transistor logic device, discrete hardware components, etc. The general-purpose processor may be a microprocessor, or the processor may be any conventional processor or the like.

The memory 1040 may include the read-only memory and random access memory, and provide instructions and data to the processor 1030. A portion of memory 1040 may include non-transitory random access memory. For example, the memory 1040 may also store information of device type.

In implementation processes, various contents of the methods described above may be accomplished by integrated logic circuits of hardware or instructions in the form of software in the processor 1030. The contents of the method disclosed in connection with the implementations of the present disclosure may be directly embodied to be accomplished by an execution of the hardware processor or by the combination of hardware and software modules in the processor. The software modules may be located in a storage medium commonly used in the art, such as a random access memory, flash memory, read-only memory, programmable read-only memory or electrically erasable programmable memory, or register. The storage medium is located in the memory 1040, and the processor 1030 reads information in the memory 1040 and completes the contents of the above method in combination with its hardware. In order to avoid repetition, it will not be described in detail here.

In a specific implementation, the determination module 720 included in the device 700 in FIG. 7 may be implemented by the processor 1030 in FIG. 10, and the communication module 710 included in the device 700 in FIG. 7 may be implemented by the input interface 1010 and the output interface 1020 in FIG. 10.

An implementation of the present disclosure provides a computer readable storage medium, and the computer readable storage medium stores one or more programs including instructions which, when executed by a portable electronic device including multiple disclosure programs, enable the portable electronic device to perform the methods of the implementations shown in FIGs. 2 to 4.

The implementation of the disclosure provides a computer program, which includes instructions which, when executed by a computer, enable the computer to execute the corresponding flows of the methods of the implementations shown in FIGs. 2 to 4.

Those of ordinary skill in the art will recognize that the exemplary elements and algorithm acts described in connection with the implementations disclosed herein can be implemented in electronic hardware, or a combination of computer software and electronic hardware. Whether these functions are performed in hardware or software depends on the specific disclosure and design constraints of the technical solution.

Those skilled in the art can clearly understand that for convenience and conciseness of description, corresponding processes in the aforementioned method implementations may be referred to for the specific working processes of the system, apparatus, and unit described above, which are not repeated here.

In several implementations provided by the present disclosure, it should be understood that the disclosed systems, apparatuses and methods may be implemented in other ways. For example, the apparatus implementations described above are only illustrative, for example, the division of the units is only a logical function division, and there may be other division manners in actual implementation. For example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the implementations.

In addition, various functional units in various implementations of the present disclosure may be integrated in one processing unit, or the various units may be physically present separately, or two or more units may be integrated in one unit.

The functions may be stored in a computer readable storage medium if implemented in a form of software functional units and sold or used as a separate product. Based on this understanding, the technical solution of the present disclosure, in essence, or the part contributing to the prior art, or the part of the technical solution, may be embodied in the form of a software product stored in a storage medium, including a number of instructions for causing a computer device (which may be a personal computer, a server, or a network device) to perform all or part of the acts of the method described in various implementations of the present disclosure. The aforementioned storage media include a U disk, mobile hard disk, read-only memory (ROM), random access memory (RAM), magnetic disk or optical disk, and other media capable of storing program codes.

What are described above are merely exemplary implementations of the present disclosure, but the protection scope of the present disclosure is not limited thereto.

Therefore, the protection scope of the present disclosure shall be subject to the protection scope defined by the claims.

## Claims

1. A method for communication, comprising:
receiving (S410), by a terminal device, first information sent by a first network device, wherein the first information is a radio access parameter; and
determining (S420), by the terminal device, whether to use the first information according to the validity information of the first information, wherein the validity information of the first information is used for indicating an applicable condition of the first information,
**characterized in that** the validity information of the first information comprises area information to which the first information applies.

2. The method of claim 1, wherein the validity information of the first information further comprises time information to which the first information applies.

3. The method of claim 2, wherein the determining, by the terminal device, whether to use the first information according to the validity information of the first information, comprises:
determining, by the terminal device, to use the first information if current time is within a time range to which the first information applies; or
determining, by the terminal device, not to use the first information if current time is not within a time range to which the first information applies.

4. The method of any one of claims 1 to 3, wherein the determining, by the terminal device, whether to use the first information according to the validity information of the first information, comprises:
determining, by the terminal device, to use the first information if an area where the terminal device is currently located is within an area range to which the first information applies; or
determining, by the terminal device, not to use the first information if an area where the terminal device is currently located is not within an area range to which the first information applies.

5. The method of any one of claims 1 to 4, the method further comprises:
determining, by the terminal device, the validity information of the first information.

6. The method of claim 5, wherein the determining, by the terminal device, the validity information of the first information, comprises:
receiving, by the terminal device, the validity information of the first information configured by the first network device.

7. The method of claim 5 or 6, wherein determining, by the terminal device, the validity information of the first information, comprises:
determining, by the terminal device, that an area to which the first information applies is a specific area or any area if the area information to which the first information applies is not configured on the terminal device.

8. The method of any one of claims 5 to 7, wherein determining, by the terminal device, the validity information of the first information, comprises:
determining, by the terminal device, that a time to which the first information applies is any time or a specific time, or a time duration to which the first information applies is any time duration or a specific time duration if the time information to which the first information applies is not configured on the terminal device.

9. The method of any one of claims 1 to 8, wherein the validity information of the first information is determined by a second network device according to at least one piece of the following: information of the terminal device, service information of the terminal device, and information provided by a third network device.

10. The method of claim 9, wherein the information of the terminal device comprises mobility area information of the terminal device and/or service capability information of the terminal device.

11. The method of claim 10, wherein the mobility area information of the terminal device comprises at least one piece of the following: registration area information of the terminal device, tracking area information of the terminal device, paging area information of the terminal device, and a set of configured cells or base stations.

12. The method of claim 10 or 11, wherein the mobility area information of the terminal device is determined according to historical movement area information of the terminal device.

13. The method of any one of claims 9 to 12, wherein the service information of the terminal device comprises service priority information of the terminal device and/or network slice information of the terminal device.

14. The method of claim 13, wherein the network slice information of the terminal device comprises at least one piece of the following: information of network slice subscribe by the terminal device, or information of network slice configured by a network device, or information of network slice allowed to be accessed by the terminal device, or information of network slice requested to be accessed by the terminal device.

15. A terminal device configured to carry out the method of any one of claims 1-14.

## Patentansprüche

1. Kommunikationsverfahren, das Folgendes umfasst:
Empfangen (S410) von ersten Informationen, die von einer ersten Netzwerkvorrichtung gesendet werden, durch eine Endgerätevorrichtung, wobei die ersten Informationen ein Funkzugangsparameter sind; und
Bestimmen (S420) durch die Endgerätevorrichtung gemäß den Validitätsinformationen der ersten Informationen, ob die ersten Informationen zu verwenden sind, wobei die Validitätsinformationen der ersten Informationen zum Anzeigen eines Geltungszustands der ersten Informationen verwendet werden,
**dadurch gekennzeichnet, dass** die Validitätsinformationen der ersten Informationen Gebietsinformationen umfassen, für die die ersten Informationen gelten.

2. Verfahren nach Anspruch 1, wobei die Validitätsinformationen der ersten Informationen ferner Zeitinformationen umfassen, für die die ersten Informationen gelten.

3. Verfahren nach Anspruch 2, wobei das Bestimmen durch die Endgerätevorrichtung gemäß den Validitätsinformationen der ersten Informationen, ob die ersten Informationen zu verwenden sind, Folgendes umfasst:
Bestimmen durch die Endgerätevorrichtung, die ersten Informationen zu verwenden, wenn eine aktuelle Zeit in einem Zeitbereich liegt, für den die ersten Informationen gelten; oder
Bestimmen durch die Endgerätevorrichtung, die ersten Informationen nicht zu verwenden, wenn eine aktuelle Zeit nicht in einem Zeitbereich liegt, für den die ersten Informationen gelten.

4. Verfahren nach einem der Ansprüche 1 bis 3, wobei das Bestimmen durch die Endgerätevorrichtung gemäß den Validitätsinformationen der ersten Informationen, ob die ersten Informationen zu verwenden sind, Folgendes umfasst:
Bestimmen durch die Endgerätevorrichtung, die ersten Informationen zu verwenden, wenn ein Gebiet, in dem sich die Endgerätevorrichtung derzeit befindet, innerhalb eines Gebietsbereichs liegt, für den die ersten Informationen gelten; oder
Bestimmen durch die Endgerätevorrichtung, die ersten Informationen nicht zu verwenden, wenn ein Gebiet, in dem sich die Endgerätevorrichtung derzeit befindet, nicht innerhalb eines Gebietsbereichs liegt, für den die ersten Informationen gelten.

5. Verfahren nach einem der Ansprüche 1 bis 4, wobei das Verfahren ferner Folgendes umfasst:
Bestimmen der Validitätsinformationen der ersten Informationen durch die Endgerätevorrichtung.

6. Verfahren nach Anspruch 5, wobei das Bestimmen der Validitätsinformationen der ersten Informationen durch die Endgerätevorrichtung Folgendes umfasst:
Empfangen der Validitätsinformationen der ersten Informationen, die durch die erste Netzwerkvorrichtung ausgelegt sind, durch die Endgerätevorrichtung.

7. Verfahren nach Anspruch 5 oder 6, wobei das Bestimmen der Validitätsinformationen der ersten Informationen durch die Endgerätevorrichtung Folgendes umfasst:
Bestimmen durch die Endgerätevorrichtung, dass ein Gebiet, für das die ersten Informationen gelten, ein spezielles Gebiet oder ein beliebiges Gebiet ist, wenn die Gebietsinformationen, für die die ersten Informationen gelten, nicht in der Endgerätevorrichtung ausgelegt sind.

8. Verfahren nach einem der Ansprüche 5 bis 7, wobei das Bestimmen der Validitätsinformationen der ersten Informationen durch die Endgerätevorrichtung Folgendes umfasst:
Bestimmen durch die Endgerätevorrichtung, dass eine Zeit,
für die die ersten Informationen gelten, eine beliebige Zeit oder eine spezielle Zeit ist, oder eine Zeitdauer,
für die die ersten Informationen gelten, eine beliebige Zeitdauer oder eine spezielle Zeitdauer ist, wenn die Zeitnformationen, für die die ersten Informationen gelten,
nicht in der Endgerätevorrichtung ausgelegt sind.

9. Verfahren nach einem der Ansprüche 1 bis 8, wobei die Validitätsinformationen der ersten Informationen durch eine zweite Netzwerkvorrichtung gemäß mindestens einem von Folgendem bestimmt werden: Informationen der Endgerätevorrichtung, Dienstinformationen der Endgerätevorrichtung und Informationen, die durch eine dritte Netzwerkvorrichtung bereitgestellt werden.

10. Verfahren nach Anspruch 9, wobei die Informationen der Endgerätevorrichtung Mobilitätsgebietsinformationen der Endgerätevorrichtung und/oder Dienstfähigkeitsinformationen der Endgerätevorrichtung umfassen.

11. Verfahren nach Anspruch 10, wobei die Mobilitätsgebietsinformationen der Endgerätevorrichtung mindestens eines von Folgendem umfassen:
Registrierungsgebietsinformationen der Endgerätevorrichtung, Verfolgungsgebietsinformationen der Endgerätevorrichtung, Paginggebietsinformationen der Endgerätevorrichtung und einen Satz von ausgelegten Zellen oder Basisstationen.

12. Verfahren nach Anspruch 10 oder 11,wobei die Mobilitätsgebietsinformationen der Endgerätevorrichtung gemäß historischen Bewegungsgebietsinformationen der Endgerätevorrichtung bestimmt werden.

13. Verfahren nach einem der Ansprüche 9 bis 12, wobei die Dienstinformationen der Endgerätevorrichtung Dienstprioritätsinformationen der Endgerätevorrichtung und/oder Netzwerkscheibeninformationen der Endgerätevorrichtung umfassen.

14. Verfahren nach Anspruch 13, wobei die Netzwerkscheibeninformationen der Endgerätevorrichtung mindestens eines von Folgendem umfassen: Informationen zu einer Netzwerkscheibe, die von der Endgerätevorrichtung abonniert wurde, oder Informationen zu einer Netzwerkscheibe, die durch eine Netzwerkvorrichtung ausgelegt ist, oder Informationen zu einer Netzwerkscheibe, auf die die Endgerätevorrichtung zugreifen darf, oder Informationen zu einer Netzwerkscheibe, für die die Endgerätevorrichtung den Zugang angefordert hat.

15. Endgerätevorrichtung, die zum Umsetzen des Verfahrens nach einem der Ansprüche 1-14 ausgelegt ist.

## Revendications

1. Procédé de communication, comprenant les étapes consistant à :
recevoir (S410), par un dispositif terminal, une première information envoyée par un premier dispositif de réseau, la première information étant un paramètre d'accès radio ; et
déterminer (S420), par le dispositif terminal, s'il faut utiliser la première information selon l'information de validité de la première information, l'information de validité de la première information étant utilisée pour indiquer une condition applicable de la première information,
le procédé étant **caractérisé en ce que** l'information de validité de la première information comprend une information de zone à laquelle s'applique la première information.

2. Procédé selon la revendication 1, dans lequel l'information de validité de la première information comprend en outre une information de temps à laquelle s'applique la première information.

3. Procédé selon la revendication 2, dans lequel le fait de déterminer, par le dispositif terminal, s'il faut utiliser la première information selon l'information de validité de la première information, comprend l'étape consistant à :
déterminer, par le dispositif terminal, qu'il faut utiliser la première information si un temps actuel est dans une plage de temps à laquelle s'applique la première information ; ou
déterminer, par le dispositif terminal, qu'il ne faut pas utiliser la première information si un temps actuel n'est pas dans une plage de temps à laquelle s'applique la première information.

4. Procédé selon l'une quelconque des revendications 1 à 3, dans lequel le fait de déterminer, par le dispositif terminal, s'il faut utiliser la première information selon l'information de validité de la première information, comprend l'étape consistant à :
déterminer, par le dispositif terminal, qu'il faut utiliser la première information si une zone où se trouve actuellement le dispositif terminal est dans une plage de zone à laquelle s'applique la première information ; ou
déterminer, par le dispositif terminal, qu'il ne faut pas utiliser la première information si une zone où se trouve actuellement le dispositif terminal n'est pas dans une plage de zone à laquelle s'applique la première information.

5. Procédé selon l'une quelconque des revendications 1 à 4, le procédé comprenant en outre l'étape consistant à :
déterminer, par le dispositif terminal, l'information de validité de la première information.

6. Procédé selon la revendication 5, dans lequel la détermination, par le dispositif terminal, de l'information de validité de la première information comprend l'étape consistant à :
recevoir, par le dispositif terminal, l'information de validité de la première information configurée par le premier dispositif de réseau.

7. Procédé selon la revendication 5 ou 6, dans lequel la détermination, par le dispositif terminal, de l'information de validité de la première information comprend l'étape consistant à :
déterminer, par le dispositif terminal, qu'une zone à laquelle s'applique la première information est une zone spécifique ou une zone quelconque si l'information de zone à laquelle s'applique la première information n'est pas configurée sur le dispositif terminal.

8. Procédé selon l'une quelconque des revendications 5 à 7, dans lequel la détermination, par le dispositif terminal, de l'information de validité de la première information comprend l'étape consistant à :
déterminer, par le dispositif terminal, qu'un temps auquel s'applique la première information est un temps quelconque ou un temps spécifique ou bien qu'une durée à laquelle s'applique la première information est une durée quelconque ou une durée spécifique si l'information de temps à laquelle s'applique la première information n'est pas configurée sur le dispositif terminal.

9. Procédé selon l'une quelconque des revendications 1 à 8, dans lequel l'information de validité de la première information est déterminée par un deuxième dispositif de réseau selon au moins une des informations suivantes :
une information du dispositif terminal, une information de service du dispositif terminal et une information fournie par un troisième dispositif de réseau.

10. Procédé selon la revendication 9, dans lequel l'information du dispositif terminal comprend une information de zone de mobilité du dispositif terminal et/ou une information de capacité de service du dispositif terminal.

11. Procédé selon la revendication 10, dans lequel l'information de zone de mobilité du dispositif terminal comprend au moins une des informations suivantes : une information de zone d'enregistrement du dispositif terminal, une information de zone de suivi du dispositif terminal, une information de zone de radiorecherche du dispositif terminal et un ensemble de cellules ou de stations de base configurées.

12. Procédé selon la revendication 10 ou 11,dans lequel l'information de zone de mobilité selon la revendication du dispositif terminal est déterminée selon une information de zone de déplacement historique du dispositif terminal.

13. Procédé selon l'une quelconque des revendications 9 à 12, dans lequel l'information de service du dispositif terminal comprend une information de priorité de service du dispositif terminal et/ou une information de tranche de réseau du dispositif terminal.

14. Procédé selon la revendication 13, dans lequel l'information de tranche de réseau du dispositif terminal comprend au moins une des informations suivantes : une information d'abonnement à une tranche de réseau par le dispositif terminal ou bien une information d'une tranche de réseau configurée par un dispositif de réseau ou bien une information d'une tranche de réseau dont l'accès par le dispositif terminal est autorisé ou bien une information d'une tranche de réseau dont l'accès par le dispositif terminal est demandé.

15. Dispositif terminal configuré pour réaliser le procédé selon l'une quelconque des revendications 1 à 14.
